# EUROPEAN PATENT APPLICATION

(11) **EP 1 085 736 A1**
(43) Date of publication of application: **21.03.2001**
(21) Application number: 99440250.1
(22) Date of filing: 17.09.1999
(51) Int. Cl.: H04M 11/06

(54) **Combined modem/telephone interface arrangement and apparatus comprising the same**

(71) Applicant: ALCATEL, 75008 Paris (FR)
(72) Inventor: Wanner, Jean-Marc, 67550 Vendenheim (FR)
(74) Representative: Rausch, Gabriele, Dr.

(57) **Abstract**

The present invention concerns a combined modem/telephone interface arrangement and telecommunication apparatus comprising the same.

Combined modem/telephone interface arrangement for connecting a modem and an analog telephone to a telephonic telecommunication line, characterised in that it comprises a modem line interface (5) connected to the telecommunication line (4) and, via a multiplexing circuit (6), to the transmission/reception lines (2', 2" and 3', 3") respectively of the modem (2) and the telephone (3), the sending and receiving gains on the transmission/reception lines (3', 3") of the telephone (3) being controlled and adjusted according to the value of the telecommunication line current (I_{L}), to a mesurable image of the same or of a data depending on the same.

## Description

The present invention relates generally to telecommunication means, more particularly telephone and modem transmission, and concerns a combined modem/telephone interface arrangement and a telecommunication apparatus incorporating the same or connected through the same to a telephone line.

Nowadays, telecommunication connections imply transmission of two different species of signals: voice and data which request different transmission criteria.

Therefore, the use of a telephone combined with a high speed modem implies up to now the presence of two line interfaces, one specifically dedicated to the telephone and the other one to the modem.

Indeed, it is not possible to use the standard telephone line interface for a high speed modem, because an interface for a modem, especially a high speed modem, must verify noise and distortion performances which are not reached by a telephone interface.

Thus, when a telephone contains two line interfaces for a single network termination line, a switching device is needed. Such a device is expensive, increases costs and takes some place on top of one of the two interfaces if integrated into the phone.

On the other hand, it must be noted that for each telephone access point the impedance of the telephone line may be different due to a different connection path length. Therefore, a regulation according to that line length must be performed, and is required in many countries, so as to ensure a correct emission and reception level and basic comfort for the user. Now, this regulation cannot be fulfilled by a modem line interface.

It is an object of the present invention to overcome at least some, and preferably all, of the inconveniences and limitations exposed herein before.

Therefore, the present invention mainly concerns a combined modem/telephone interface arrangement for connecting a modem and an analog telephone to a telephonic telecommunication line, characterised in that it comprises a modem line interface connected to the telecommunication line and, via a multiplexing circuit, to the transmission/reception lines respectively of the modem and the telephone, the sending and receiving gains on the transmission/reception lines of the telephone being controlled and adjusted according to the value of the telecommunication line current I_{L,} to a mesurable image of the same or of a data depending on the same.

The present invention will be better understood thanks to the following description and drawings of given embodiments of the said invention given as non limitative examples thereof.

In the accompanying drawings:
Figure 1 is a block diagram of an interface arrangement according to the invention, and
Figure 2 is a detailled electrical plan of a simplified analog voltage controlled amplifier which is part of the interface represented on figure 1 according to a particular embodiment of the invention.

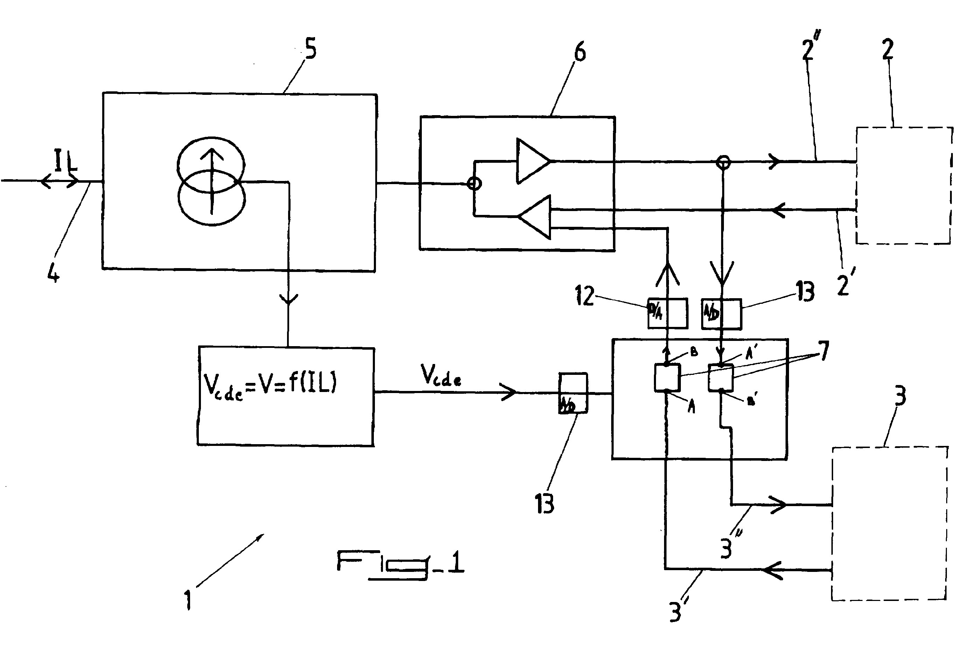

As can be seen on figure 1 of the drawings, the present invention provides a combined modem/telephone interface arrangement 1 for connecting a modem 2 and an analog telephone 3 to a telephonic telecommunication line 4.

This interface arrangement 1 is mainly characterised in that it comprises a modem line interface 5 connected to the telecommunication line 4 and, via a multiplexing circuit 6, to the transmission/reception lines 2', 2" and 3', 3" respectively of the modem 2 and the telephone 3, the sending and receiving gains on the transmission/reception lines 3', 3" of the telephone 3 being controlled and adjusted according to the value of the telecommunication line current I_{L}, to a mesurable image of the same or of a data depending on the same.

In order to minimise complexity of the interface arrangement 1, a line current I_{L} depending data is used to adjust the emission and reception gains which consists of the voltage V that is an image of the said line current I_{L}, the said control voltage V being provided by or measured on a circuitry component of the modem line interface 5.

The measured control voltage V is preferably chosen as a linear function of the line current: V = f (I_{L}):= a x I_{L} + b, allowing an easy setting of the gains and amplification levels.

The value of the control voltage V can be gathered directly at 5 an adapted component of the modem line interface 5, or through an optocoupled line if the said modem line interface is isolated.

The invention can be particularly advantageously applied when the modem line interface 5 is a high speed modem line interface and the multiplexing circuit 6 is a hybrid duplexor of the 2-4 wires type, configured as represented on figure 1.

According to a first embodiment of the invention, the telecommunication line current I_{L} value or the corresponding image or depending data value of the same can be submitted to an analog/digital conversion, the emission/reception gains being controlled by adapted integrated circuits connected to the multiplexing circuit 6 and determining directly the power level of the entering and exiting signals on the telephone emission/reception lines 3', 3".

Possible digital/analog conversion circuit 12 and analog/digital conversion circuits 13 to be used in such an embodiment of the invention are shematically show in dotted lines on figure 1. Integrated gain control circuits are known by the person skilled in the art and do not require any further explanations.

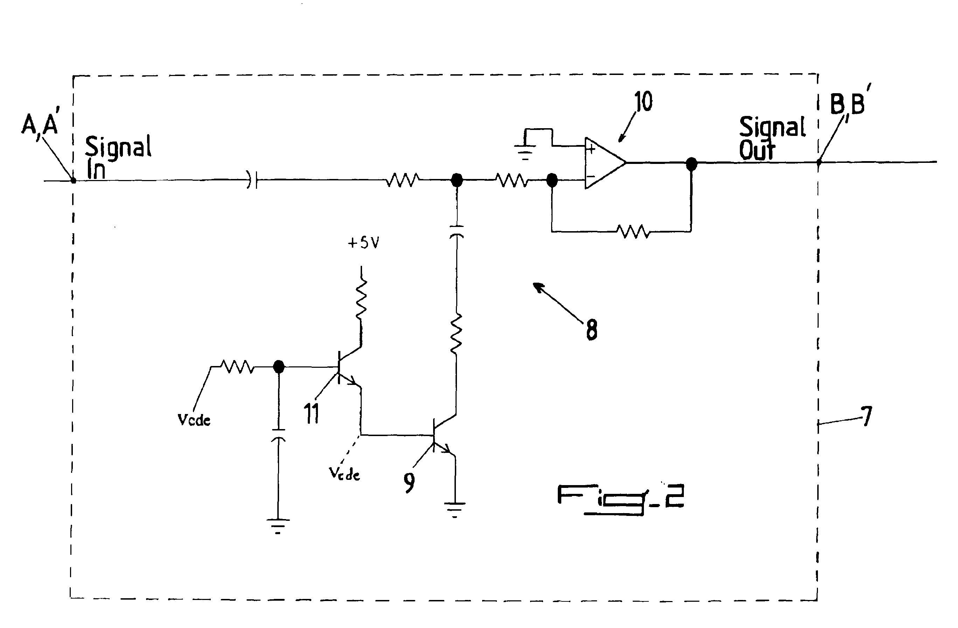

According to a second embodiment of the invention, which will be explained in relation with both figures 1 and 2, each of the emission and reception lines 3', 3" connecting the multiplexing circuit 6 to the telephone 3 comprises an analog voltage controlled amplifier arrangement 7 consisting of at least one resistive divider 8 containing a transistor 9 to which base a control voltage V_{cde} = V is applied, which is an image of the line current I_{L}.

A prefered construction of the invention provides that the transistor 9, which is not polarised at its collector, is used as a variable resistance in the form of R_{ce} = f (V_{be}) and constitutes the grounded path of the resistive divider 8, the latter providing input signals to an operationnal amplifier 10 delivering the exiting signals of the analog voltage controlled amplifier arrangement 7.

Thus, when the voltage V_{cde} is applied to the base of that transistor 9, the resulting conduction implies a modification of the corresponding resistance towards the collector.

Furthermore, the non polarisation of the collector of the transistor 9 allows that small signals can be applied to it.

As indicated on figure 2 (dotted line), the voltage V_{cde} can be applied directly to the base of transistor 9.

Alternatively, in order to increase linearity of the system and as also shown on figure 2, the control voltage V_{cde} = V is applied to a first transistor 11 forming the head of a cascaded configuration of two transistors 11, 9, the transistor 9 being part of the resistive divider 8 forming the downstream transistor.

The present invention also concerns a telecommunication apparatus comprising at least a modern and an analog telephone, characterised in that it comprises also an interface arrangement 1 as described herein before.

Thanks to the invention, it is possible to overcome the aforementioned prior art limitations.

Indeed, the resulting interface arragement construction is simplified and allows to save up an interface circuit (the classical telephone line interface) as well as the switching device between the two line interfaces of the prior art.

Furthermore, the voltage controlled amplifier according to a prefered embodiment of the invention can be made with a few basic low cost components and does also allow to isolate the line interface, an imperative condition for a telephone line interface.

The present invention is, of course, not limited to the preferred embodiments described and represented herein, changes can be made or equivalents used without departing from the scope of the invention.

## Claims

1. A combined modem/telephone interface arrangement for connecting a modem and an analog telephone to a telephonic telecommunication line, characterised in that it comprises a modem line interface (5) connected to the telecommunication line (4) and, via a multiplexing circuit (6), to the transmission/reception lines (2', 2" and 3', 3") respectively of the modem (2) and the telephone (3), the sending and receiving gains on the transmission/reception lines (3', 3") of the telephone (3) being controlled and adjusted according to the value of the telecommunication line current (I_{L}), to a mesurable image of the same or of a data depending on the same.

2. An interface arrangement according to claim 1, wherein a line current (I_{L}) depending data is used to adjust the emission and reception gains which consists of the voltage (V) that is an image of the said line current (I_{L}), the said control voltage (V) being provided by or measured on a circuitry component of the modem line interface (5).

3. An interface arrangement according to any of claims 1 and 2, wherein the modem line interface (5) is a high speed modem line interface and the multiplexing circuit (6) is a hybrid duplexor of the 2-4 wires type.

4. An interface arrangement according to anyone of claims 1 to 3, wherein the telecommunication line current (I_{L}) value or the corresponding image or depending data value of the same is submitted to an analog/digital conversion, the emission/reception gains being controlled by adapted integrated circuits connected to the multiplexing circuit (6) and determining directly the power level of the entering and exiting signals on the telephone emission/reception lines (3', 3").

5. An interface arrangement according to anyone of claims 1 to 3, wherein each of the emission and reception lines (3', 3") connecting the multiplexing circuit (6) to the telephone (3) comprises an analog voltage controlled amplifier arrangement (7) consisting of at least one resistive divider (8) containing a transistor (9) to which base a control voltage (V_{cde} = V) is applied, which is an image of the line current (I_{L}).

6. An interface arrangement according to claim 5, wherein the transistor (9), which is not polarised at its collector, is used as a variable resistance in the form of R_{ce} = f (V_{be}) and constitutes the grounded path of the resistive divider (8), the latter providing input signals to an operationnal amplifier (10) delivering the exiting signals of the analog voltage controlled amplifier arrangement (7).

7. An interface arrangement according to anyone of claims 5 and 6, wherein the control voltage V_{cde} = V is applied to a first transistor (11) forming the head of a cascaded configuration of two transistors (11, 9), the transistor (9) being part of the resistive divider (8) forming the downstream transistor.

8. A telecommunication apparatus comprising at least a modem and an analog telephone, characterised in that it comprises also an interface arrangement (1) according to anyone of claims 1 to 7.
